# EUROPEAN PATENT SPECIFICATION

(11) **EP 2 775 628 B1**
(45) Date of publication and mention of the grant of the patent: **27.05.2015**
(21) Application number: 14156557.2
(22) Date of filing: 25.02.2014
(51) Int. Cl.: H04B 1/18

(54) **Antenna-apparatus connection circuit**
Verbindungsschaltung für Antennenvorrichtung
Circuit de connexion d'antenne

(30) Priority: 04.03.2013 JP 2013041361
(43) Date of publication of application: 10.09.2014
(73) Proprietor: Alps Electric Co., Ltd., Tokyo 145-8501 (JP)
(72) Inventor: Maruyama, Takashi, Tokyo, 145-8501 (JP)
(74) Representative: Klunker . Schmitt-Nilson . Hirsch

(56) References cited:
- GB-A- 2 439 500
- JP-A- 2012 191 381
- US-A1- 2006 290 335
- US-A1- 2008 305 749

## Description

The present invention relates to an antenna-apparatus connection circuit which is connected to an antenna apparatus and which detects the connection state of the antenna apparatus, and particularly to an antenna-apparatus connection circuit having a current limiting circuit.

In receivers used in, for example, global positioning system (GPS) apparatuses mounted on vehicles or the like, it is important that an antenna apparatus is satisfactorily connected to receive incoming radio waves optimally. A state in which an antenna apparatus is satisfactorily connected is a state in which the impedance of the antenna apparatus seen from an antenna-apparatus connection circuit is within a range of proper impedance. A state in which the antenna apparatus is unsatisfactorily connected is a state in which the impedance of the antenna apparatus seen from the antenna-apparatus connection circuit is out of the range of proper impedance. To detect the connection state of an antenna apparatus, an antenna-apparatus connection circuit which detects whether the connection state of the antenna apparatus is satisfactory or unsatisfactory may be included in a receiver. A known antenna-apparatus connection circuit is one having a configuration in which current limiting is performed by turning off a switching element, when the impedance of an antenna apparatus is smaller than a predetermined value (for example, see JP 2012-191381 A).

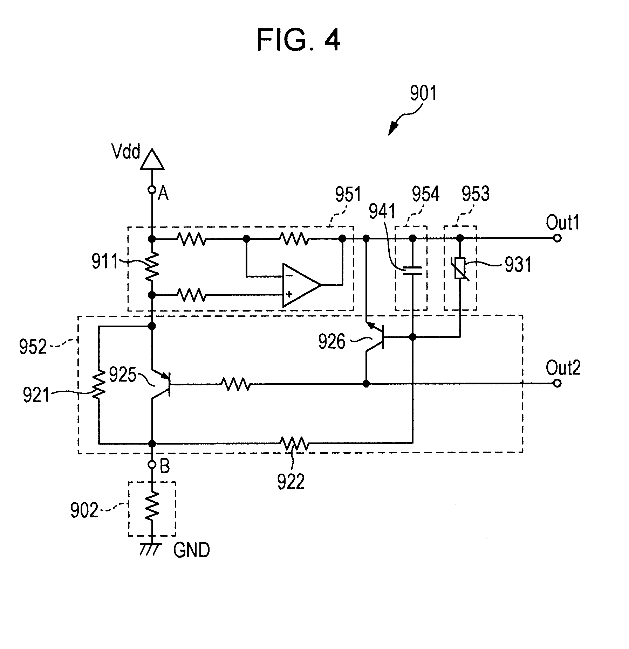

Fig. 4 illustrates an antenna-apparatus connection circuit (antenna connection-state detection circuit) 901 of the related art which is described in JP 2012-191381 A.

As illustrated in Fig. 4, the antenna-apparatus connection circuit 901 includes an antenna detection circuit 951, a current limiting circuit 952, a temperature compensation circuit 953, and a potential holding circuit 954. The antenna-apparatus connection circuit 901 is provided with a terminal (power terminal) A which is supplied with a power supply voltage Vdd and a terminal (antenna apparatus connector) B which is connected to an antenna 902. The antenna-apparatus connection circuit 901 also includes a first output terminal Out1 and a second output terminal Out2 for transmitting a detection result of the connection state of the antenna 902 to the outside.

In the antenna-apparatus connection circuit 901, a transistor 925 and a resistance 921 are connected in parallel to each other. When the impedance of the antenna 902 is equal to or larger than a predetermined value, a transistor 926 is turned on, and the transistor 925 is also turned on. In contrast, when the impedance of the antenna 902 is smaller than the predetermined value, the transistor 926 is turned off, and the transistor 925 is also turned off. Therefore, when the impedance of the antenna 902 is smaller than the predetermined value, instead of passing a current through the transistor 925, a current can flow through the resistance 921. That is, a current flowing through the transistor 925 can be limited. Accordingly, damage of the transistor 925 caused by a large current can be prevented.

The temperature compensation circuit 953 connected to the base of the transistor 926 employs a thermistor 931 having a temperature characteristic in which the resistance is changed depending on a change in the ambient temperature. A design is employed so that usage of the thermistor 931 allows a change in the base-emitter voltage of the transistor 926 caused by a change in the ambient temperature not to influence the current upper limit. The thermistor 931 is a resistance element more expensive than a typical resistance.

The potential holding circuit 954 for holding the base voltage of the transistor 926 for some time period is connected parallel with the temperature compensation circuit 953. A capacitor 941 such as a magnetic capacitor is used as the potential holding circuit 954.

In the antenna-apparatus connection circuit 901, in accordance with a detection result from the antenna detection circuit 951, the transistor 926 is turned on or off, causing the transistor 925 to be turned on or off. The resistance 921 as well as the thermistor 931 and a resistance 922 are used as bias resistances for supplying an optimal bias voltage to the base of the transistor 926. That is, the resistance 921 not only is used to pass a current after a current flowing through the transistor 925 is limited, but also is used as a bias resistance for the transistor 926.

The minimum value of the impedance of the antenna 902 in a satisfactory connection state in the antenna-apparatus connection circuit 901 is set to 100 Ω. Therefore, even when the impedance of the antenna 902 is equal to 100 Ω, the value of the resistance 921 is to be set to a resistance value which enables the transistor 926 to be turned on. Accordingly, it is not always possible to set the value of the resistance 921 to a large value, and the value of the resistance 921 has to be set to a small value to some extent. For example, Japanese Unexamined Patent Application Publication No. 2012-191381 describes the resistance 921 whose value is 820 Ω.

Therefore, when the impedance of the antenna 902 becomes extremely small, for example, when the antenna 902 is short-circuited, a large current to some extent flows through the resistance 921. For example, assume that the following conditions are satisfied: the antenna 902 is short-circuited; the power supply voltage Vdd is 5 V; the value of the resistance 911 is 3.3 Ω as described in JP 2012-191381 A; and the value of the resistance 921 is 820 Ω. Then, a current of about 6 mA flows through the antenna-apparatus connection circuit 901. That is, for example, when the antenna 902 is short-circuited, a current flowing through the transistor 925 can be limited, but a relatively large current wastefully flows through the antenna-apparatus connection circuit 901 after the current limiting, resulting in a configuration inadequate to power saving.

The present invention has been made in view of the problem of the related art, and provides an antenna-apparatus connection circuit in which current limiting can be performed and in which the value of a current flowing after current limiting can be decreased in the case where the impedance of an antenna apparatus decreases, achieving a circuit configuration preferable for power saving.

According to an aspect, an antenna-apparatus connection circuit in the present invention provided with an antenna apparatus connector connected to an antenna apparatus and with a power terminal includes a first switching element having a control end, a first end, and a second end; a second switching element having a control end, a first end, and a second end; a first resistance having a first end connected to the power terminal; and a second resistance having a first end connected to the ground. The first end of the first switching element is connected to the second end of the first resistance. The second end of the first switching element is connected to the antenna apparatus connector. The first end of the second switching element is connected to the second end of the second resistance. The second end of the second switching element is connected to the control end of the first switching element. The control end of the second switching element is connected to the second end of the first switching element. The antenna-apparatus connection circuit further includes a third switching element having a control end, a first end, and a second end, and a third resistance having a first end connected to the control end of the first switching element. The first end of the third switching element is connected to the power terminal. The second end of the third switching element is connected to the first end of the second switching element. The control end of the third switching element is connected to the second end of the third resistance. A fourth resistance is connected between the first end and the second end of the first switching element. When an impedance of the antenna apparatus is equal to or larger than a minimum value of a predetermined proper impedance, the third switching element is turned off, and the first switching element is turned on. When the impedance of the antenna apparatus is smaller than the minimum value of the proper impedance, the third switching element is turned on, and the first switching element is turned off.

In an antenna-apparatus connection circuit having such a configuration, a voltage obtained by adding the voltage between the first end and the control end of the first switching element to the voltage drop across the first resistance is applied between the first end and the control end of the third switching element via the third resistance. When a decreased impedance of the antenna apparatus causes a large current to flow through the first switching element, a current flowing through the first resistance also becomes large, resulting in a large voltage across the first resistance. Thus, the voltage between the first end and the control end of the third switching element becomes large. When this voltage becomes large enough to turn on the third switching element, the third switching element is turned on, the second switching element is turned off, and the first switching element is turned off. Therefore, a current equal to or larger than the current upper limit can be prevented from flowing through the first switching element. That is, the antenna-apparatus connection circuit in the present invention enables current limiting to be performed. The antenna-apparatus connection circuit also enables the current upper limit to be set by setting the value of the first resistance as appropriate.

The on/off control on the first switching element for performing current limiting depends on the on/off state of the second switching element. The on/off control on the second switching element depends on the on/off state of the third switching element. In other words, unlike a circuit of the related art, a bias voltage for the second switching element is not related to current limiting. Therefore, the value of the fourth resistance is not related to current limiting. Consequently, the value of the fourth resistance can be made larger. As a result, even when the antenna apparatus is short-circuited, a current flowing through the fourth resistance can be made small, achieving a circuit configuration preferable for power saving.

In the antenna-apparatus connection circuit in the present invention having the above-described configuration according to an embodiment, the first switching element is a first transistor of PNP type. The second switching element is a second transistor of NPN type. The third switching element is a third transistor of PNP type. Each of the first ends of the first switching element, the second switching element, and the third switching element is an emitter. Each of the second ends of the first switching element, the second switching element, and the third switching element is a collector. Each of the control ends of the first switching element, the second switching element, and the third switching element is a base. A temperature characteristic of a base-emitter voltage of the first transistor matches a temperature characteristic of a base-emitter voltage of the third transistor.

In general, the base-emitter voltage of a transistor becomes smaller as the temperature increases, and becomes larger as the temperature decreases. In the antenna-apparatus connection circuit in the present invention, the transistors may be selected so that the temperature characteristic of the base-emitter voltage of the first transistor matches that of the third transistor. Therefore, when the ambient temperature changes, a change in the base-emitter voltage of the third transistor due to the temperature change is substantially the same as that of the first transistor. Consequently, the changes in the base-emitter voltages of the transistors due to the temperature change cancel each other out. A change in the difference between a voltage obtained by adding the base-emitter voltage of the first transistor to the voltage drop across the first resistance, and the base-emitter voltage of the third transistor, according to only the ambient temperature can be suppressed. As a result, the set value of the voltage across the first resistance at the time of current limiting does not change in accordance with the ambient temperature. Therefore, a change in the current upper limit, according to the ambient temperature can be suppressed.

In the antenna-apparatus connection circuit in the present invention having this configuration, a change in the base-emitter voltage of the second transistor due to the temperature, which is taken into consideration in the circuit of the related art, is not taken into consideration. Therefore, a resistance (thermistor) for temperature compensation, which is connected to the base of a transistor of the related art which corresponds to the second transistor, is not used. As a result, the cost of the antenna-apparatus connection circuit can be reduced. A capacitor such as a magnetic capacitor which is used in a potential holding circuit in the antenna-apparatus connection circuit of the related art is not necessary, further reducing the cost of the antenna-apparatus connection circuit.

The antenna-apparatus connection circuit in the present invention having the above-described configuration according to an embodiment, further includes a comparator having an inverting input terminal, a non-inverting input terminal, and an output terminal. The inverting input terminal is connected to the first end of the first resistance via a fifth resistance. The non-inverting input terminal is connected to the second end of the first resistance via a sixth resistance. A seventh resistance is connected between the inverting input terminal and the output terminal. Whether or not the impedance of the antenna apparatus is the proper impedance is detectable by using an output voltage level of the comparator.

The antenna-apparatus connection circuit having this configuration has a setting in which, when the impedance of the antenna apparatus is the proper impedance, the output voltage of the comparator becomes low, and in which, when the impedance of the antenna apparatus is a high impedance, the output voltage of the comparator becomes high. When the impedance of the antenna apparatus is a low impedance, the first switching element is turned off so that a small current flows through the first resistance. Accordingly, the output voltage of the comparator at that time becomes high. Therefore, the output voltage of the comparator can be set to low when the impedance of the antenna apparatus is the proper impedance, and the output voltage of the comparator can be set to high when the impedance of the antenna apparatus is not the proper impedance. Thus, the impedance of an antenna apparatus which is the proper impedance can be distinguished from that which is not the proper impedance, by using only the output voltage of a comparator.

In the antenna-apparatus connection circuit in the present invention, when the impedance of an antenna apparatus decreases to a value smaller than the minimum value of the proper impedance so that a large current flows through the first switching element, the third switching element is turned on, and the first switching element is turned off. Thus, a current whose value is equal to or larger than the current upper limit can be prevented from flowing through the first switching element. That is, in the antenna-apparatus connection circuit in the present invention, current limiting can be performed. The current upper limit can be set by setting the value of the first resistance as appropriate.

Unlike the circuit of the related art, the bias voltage for the second switching element is not related to current limiting. Therefore, the value of the fourth resistance is not related to current limiting. Thus, the value of the fourth resistance can be set to any value, enabling the value of the fourth resistance to be increased. As a result, the magnitude of a current flowing through the fourth resistance can be made smaller, achieving a circuit configuration preferable for power saving.

### BRIEF DESCRIPTION OF THE DRAWINGS

Fig. 1 is a block diagram illustrating a connection relationship between an antenna-apparatus connection circuit and an antenna apparatus according to an embodiment of the present invention;
Fig. 2 is a circuit diagram of the antenna-apparatus connection circuit according to the embodiment of the present invention;
Fig. 3 is a table describing states of transistors, a first output terminal, and a second output terminal of the antenna-apparatus connection circuit according to the embodiment of the present invention; and
Fig. 4 is a circuit diagram of an antenna-apparatus connection circuit of the related art.

An embodiment of the present invention will be described below referring to the drawings.

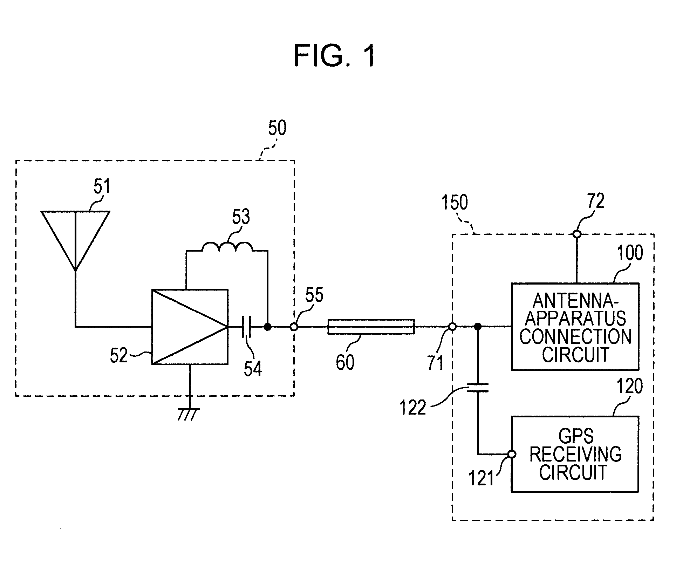

Fig. 1 is a block diagram illustrating a connection relationship between an antenna-apparatus connection circuit 100 and an antenna apparatus 50 according to the embodiment of the present invention.

As illustrated in Fig. 1, the antenna-apparatus connection circuit 100 according to the embodiment of the present invention is included in a global positioning system (GPS) receiver 150 mounted on a vehicle or the like. The GPS receiver 150 includes the antenna-apparatus connection circuit 100, and also includes a GPS receiving circuit 120 which performs various types of processing for GPS reception. The antenna-apparatus connection circuit 100 is connected to a power terminal 72 so as to supply power to the antenna apparatus 50. The antenna-apparatus connection circuit 100 has an antenna apparatus connector 71 connected to a high-frequency-signal input terminal 121 of the GPS receiving circuit 120, and the high-frequency-signal input terminal 121 receives a high frequency signal from the antenna apparatus 50. A capacitor 122 for cutting a direct-current voltage which is the power supply voltage is connected between the antenna apparatus connector 71 and the high-frequency-signal input terminal 121. A cable 60 connects the GPS receiver 150 and the antenna apparatus 50. The cable 60 plays a role of supplying power from the antenna-apparatus connection circuit 100 to the antenna apparatus 50 as well as of transmitting a high frequency signal received by the antenna apparatus 50, to the GPS receiver 150.

As illustrated in Fig. 1, the antenna apparatus 50 includes a low noise amplifier (LNA) circuit 52, an inductor 53, a capacitor 54, and a high-frequency-signal output terminal 55. The antenna 51 receives a transmitted GPS signal, and transmits the received GPS signal to the LNA circuit 52. The LNA circuit 52 amplifies the received GPS signal, and the amplified GPS signal is transmitted from the high-frequency-signal output terminal 55 through the cable 60 to the high-frequency-signal input terminal 121 of the GPS receiving circuit 120. A power terminal (not illustrated) of the LNA circuit 52 is connected to the cable 60 via the inductor 53 so that a high frequency signal which is output from the LNA circuit 52 is not influenced. A high-frequency-signal output terminal (not illustrated) of the LNA circuit 52 is connected to the cable 60 via the capacitor 54 so that the direct-current voltage of the power supplied from the antenna-apparatus connection circuit 100 is not applied to the high-frequency-signal output terminal of the LNA circuit 52.

The circuit configuration of the antenna-apparatus connection circuit 100 will be described.

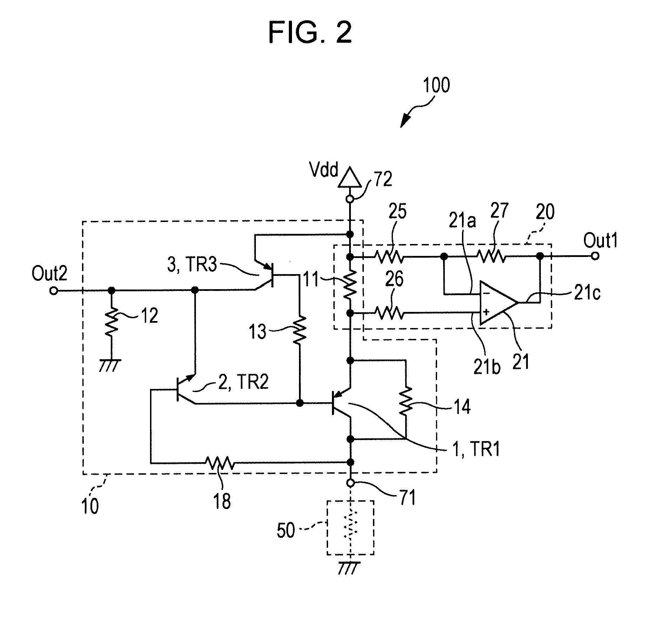

Fig. 2 is a circuit diagram of the antenna-apparatus connection circuit 100 according to the embodiment of the present invention. As illustrated in Fig. 2, the antenna-apparatus connection circuit 100 includes a current limiting circuit 10 and an antenna-apparatus connection-state determination circuit 20.

The current limiting circuit 10 includes a first transistor TR1 as a first switching element 1, a second transistor TR2 as a second switching element 2, and a third transistor TR3 as a third switching element 3. The current limiting circuit 10 also includes a first resistance 11, a second resistance 12, a third resistance 13, a fourth resistance 14, and an eighth resistance 18 for connecting between the transistors and between the transistors and a power terminal 72 or the antenna apparatus connector 71. The antenna apparatus connector 71 is connected to the antenna apparatus 50 as described above.

The first transistor TR1 as the first switching element 1 is a PNP bipolar transistor, and has an emitter as one end of the first switching element 1, a collector as the other end, and a base as the control end. The fourth resistance 14 is connected between the emitter and the collector of the first transistor TR1, and the collector of the first transistor TR1 is connected to the antenna apparatus connector 71. The first resistance 11 has one end connected to the power terminal 72, and the other end connected to the emitter of the first transistor TR1.

The second transistor TR2 as the second switching element 2 is an NPN bipolar transistor, and has an emitter as one end of the second switching element 2, a collector as the other end, and a base as the control end. In the second transistor TR2, the emitter is connected to one end of the second resistance 12 in which the other end is grounded, and the collector is connected to the base of the first transistor TR1. The base of the second transistor TR2 is connected to the collector of the first transistor TR1 through the eighth resistance 18. The emitter of the second transistor TR2 is connected to a second output terminal Out2 so that the emitter voltage of the second transistor TR2 is output from the second output terminal Out2.

The third transistor TR3 as the third switching element 3 is a PNP bipolar transistor, and has an emitter as one end of the third switching element 3, a collector as the other end, and a base as the control end. In the third transistor TR3, the emitter is connected to the power terminal 72, and the collector is connected to the emitter of the second transistor TR2. The base of the third transistor TR3 is connected to the base of the first transistor TR1 through the third resistance 13.

In the antenna-apparatus connection circuit 100, the first transistor TR1 and the third transistor TR3 are selected so that the temperature characteristic of the base-emitter voltage of the first transistor TR1 matches that of the third transistor TR3.

The antenna-apparatus connection-state determination circuit 20 includes the first resistance 11 shared with the current limiting circuit 10, a comparator 21, a fifth resistance 25, a sixth resistance 26, and a seventh resistance 27. The antenna-apparatus connection-state determination circuit 20 can output a determination result of the connection state of the antenna apparatus, as a voltage from the first output terminal Out1. A detailed circuit configuration and a circuit operation of the antenna-apparatus connection-state determination circuit 20 will be described below.

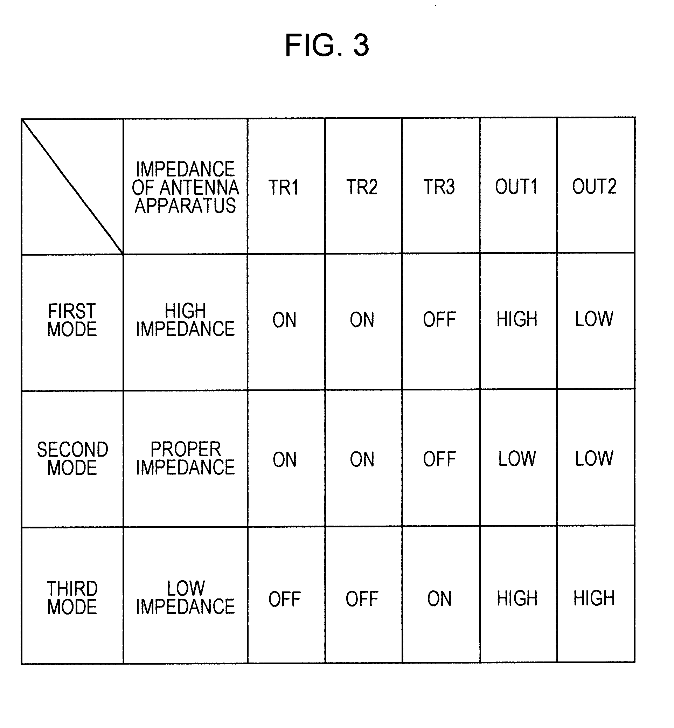

A circuit operation of the current limiting circuit 10 will be described by using Figs. 2 and 3.

Fig. 3 is a table describing operation states of the circuits by classifying impedance states of the antenna apparatus 50 into modes of high impedance, proper impedance, and low impedance. The operation states of the circuits indicate on/off states of the first transistor TR1, the second transistor TR2, and the third transistor TR3 in the modes. Low/high states of the voltages of the first output terminal Out1 and the second output terminal Out2 are also indicated. A value corresponding to half the power supply voltage is used as a threshold. An output voltage higher than the threshold voltage is determined to be high, and an output voltage lower than the threshold voltage is determined to be low.

In the antenna-apparatus connection circuit 100, the minimum value and the maximum value of the proper impedance of the antenna apparatus 50 are set to predetermined values. In the present embodiment, the minimum value of the proper impedance of the antenna apparatus 50 is set to 100 Ω. The maximum value of the proper impedance is set to 5 kΩ. Hereinafter, description will be made under the assumption that an impedance of the antenna apparatus 50 which is equal to or larger than 100 Ω and equal to or smaller than 5 kΩ is regarded as proper impedance; an impedance smaller than 100 Ω is regarded as low impedance; and an impedance larger than 5 kΩ is regarded as high impedance.

In the antenna-apparatus connection circuit 100, when the impedance of the antenna apparatus 50 is equal to or larger than the minimum value of the proper impedance, the third switching element 3 is turned off, and the first switching element 1 is turned on. When the impedance of the antenna apparatus 50 is smaller than the minimum value of the proper impedance, the third switching element is turned on, and the first switching element is turned off. The description will be made under the assumption that the antenna apparatus 50 operates in the proper impedance mode at first, and then enters the high impedance mode or the low impedance mode.

A circuit operation performed when the impedance of the antenna apparatus 50 is in the proper impedance mode will be described.

The voltage divided by the first resistance 11, the fourth resistance 14, and the antenna apparatus 50 is applied to the base of the second transistor TR2, and the second transistor TR2 is turned on, causing the first transistor TR1 to be turned on due to the base current flowing through the first transistor TR1. This causes a current to flow through the first transistor TR1, and the same current also flows through the first resistance 11. Accordingly, a voltage drop occurs across the first resistance 11. A voltage obtained by adding the base-emitter voltage of the first transistor TR1 to the voltage drop across the first resistance 11 is applied between the base and the emitter of the third transistor TR3, via the third resistance 13. The value of the first resistance 11 is set so that, when the impedance of the antenna apparatus 50 is equal to or larger than the minimum value of the proper impedance, the voltage obtained by adding the base-emitter voltage of the first transistor TR1 to the voltage drop across the first resistance 11 does not reach a voltage which is sufficient to turn on the third transistor TR3.

Therefore, the third transistor TR3 is off. At that time, the collector voltage of the first transistor TR1 is applied to the base of the second transistor TR2 via the eighth resistance 18. Accordingly, the second transistor TR2 is on. Since the second transistor TR2 is on, the base current of the first transistor TR1 flows through the second transistor TR2 and the second resistance 12, causing the first transistor TR1 to remain on.

In the second mode in Fig. 3, the above-described operation states of the transistors are described. Both of the first transistor TR1 and the second transistor TR2 are turned on, and the third transistor TR3 is turned off.

A circuit operation performed when the impedance of the antenna apparatus 50 is in the high impedance mode will be described.

The voltage divided by the first resistance 11, the fourth resistance 14, and the antenna apparatus 50 is applied to the base of the second transistor TR2, and the second transistor TR2 is turned on, causing the first transistor TR1 to be turned on due to the base current flowing through the first transistor TR1. This causes a current to flow through the first transistor TR1, and the same current also flows through the first resistance 11. Accordingly, a voltage drop occurs across the first resistance 11. Since the impedance of the antenna apparatus 50 is in the high impedance mode, a current flowing through the first resistance 11 is smaller than that flowing when the impedance of the antenna apparatus 50 is in the proper impedance mode. Therefore, a voltage obtained by adding the base-emitter voltage of the first transistor TR1 to the voltage drop across the first resistance 11 does not reach a voltage which is sufficient to turn on the third transistor TR3.

Therefore the third transistor TR3 is off. At that time, the collector voltage of the first transistor TR1 is applied to the base of the second transistor TR2 via the eighth resistance 18. Accordingly, the second transistor TR2 is on. Since the second transistor TR2 is on, the base current of the first transistor TR1 flows through the second transistor TR2 and the second resistance 12, causing the first transistor TR1 to remain on.

In the first mode in Fig. 3, the above-described operation states of the transistors are described. In this case, similarly to the second mode, both of the first transistor TR1 and the second transistor TR2 are turned on, and the third transistor TR3 is turned off.

A circuit operation performed when the impedance of the antenna apparatus 50 is in the low impedance mode will be described.

The voltage divided by the first resistance 11, the fourth resistance 14, and the antenna apparatus 50 is applied to the base of the second transistor TR2, and the second transistor TR2 is turned on, causing the first transistor TR1 to be turned on due to the base current flowing through the first transistor TR1. This causes a current to flow through the first transistor TR1, and the same current also flows through the first resistance 11. Accordingly, a voltage drop occurs across the first resistance 11. At that time, since the impedance of the antenna apparatus 50 is in the low impedance mode, a current flowing through the first resistance 11 is larger than that flowing when the impedance of the antenna apparatus 50 is in the proper impedance mode. Therefore, the voltage drop which occurs across the first resistance 11 is larger than that which occurs when the impedance is in the proper impedance mode. A voltage obtained by adding the base-emitter voltage of the first transistor TR1 to the large voltage drop across the first resistance 11 is applied between the base and the emitter of the third transistor TR3 via the third resistance 13.

The value of the first resistance 11 is set so that, when the impedance of the antenna apparatus 50 becomes the low impedance, a voltage obtained by adding the base-emitter voltage of the first transistor TR1 to the voltage drop across the first resistance 11 exceeds a voltage which is sufficient to turn on the third transistor TR3. In other words, the value of the first resistance 11 is set so that, in the case where the impedance of the antenna apparatus 50 goes below, for example, 100 Ω to become the low impedance, when a current flowing through the first transistor TR1 reaches the current upper limit, the third transistor TR3 is turned on.

Therefore, when the impedance of the antenna apparatus 50 is in the low impedance mode, the third transistor TR3 is turned on. As a result, the emitter of the second transistor TR2 becomes high, causing the second transistor TR2 to be turned off. Since the second transistor TR2 is turned off, the base of the first transistor TR1 becomes high, and the first transistor TR1 is also turned off.

In the third mode in Fig. 3, the above-described operation states of the transistors are described. Both of the first transistor TR1 and the second transistor TR2 are turned off, and the third transistor TR3 is turned on.

As described above, the antenna-apparatus connection circuit 100 enables current limiting to be performed, and enables setting of a current value just before the first transistor TR1 as the first switching element 1 is turned off, that is, the current upper limit, by setting the value of the first resistance 11 as appropriate.

The on/off control on the first transistor TR1 for performing current limiting depends on the on/off state of the second transistor TR2. The on/off control on the second transistor TR2 depends on the on/off state of the third transistor TR3. Therefore, unlike the antenna-apparatus connection circuit 901 of the related art, the bias voltage for the second transistor TR2 is not related to current limiting, that is, the value of the fourth resistance 14 is not related to current limiting. Therefore, the value of the fourth resistance 14 can be increased. As a result, the magnitude of a current flowing after current limiting is made smaller than that of the related art, achieving a circuit configuration preferable for power saving.

In general, the base-emitter voltage of a transistor becomes smaller as the temperature increases, and becomes larger as the temperature decreases. In the antenna-apparatus connection circuit 100 according to the embodiment of the present invention, as described above, the transistors are selected so that the temperature characteristic of the base-emitter voltage of the first transistor TR1 matches that of the third transistor TR3. Therefore, when the ambient temperature changes, a change in the base-emitter voltage of the third transistor TR3 due to the temperature change is substantially the same as that of the first transistor TR1. Consequently, the changes in the base-emitter voltages of the transistors due to the temperature change cancel each other out. Accordingly, the current value at the time of current limiting, that is, the current upper limit is not changed when the ambient temperature changes. The value of the third resistance 13 is set as appropriate in accordance with the temperature characteristics of the base-emitter voltages of the first transistor TR1 and the third transistor TR3, enabling the current upper limit to maintain at a certain value regardless of a change in the ambient temperature.

In the antenna-apparatus connection circuit 100, the minimum value of the proper impedance of the antenna apparatus 50 described above is set to 100 Ω, and the maximum value is set to 5 kΩ. Accordingly, the value of the first resistance 11 is set to 5 Ω; the second resistance 12, to 1 kΩ; the third resistance 13, to 100 kΩ; the fourth resistance 14, to 10 kΩ; and the eighth resistance 18, to 20 kΩ.

A circuit operation of the antenna-apparatus connection-state determination circuit 20 will be described by using Figs. 2 and 3.

In the antenna-apparatus connection-state determination circuit 20, an inverting input terminal 21a of the comparator 21 is connected to one end of the first resistance 11 via the fifth resistance 25, and a non-inverting input terminal 21b is connected to the other end of the first resistance 11 via the sixth resistance 26. The seventh resistance 27 is connected between the inverting input terminal 21a and an output terminal 21c.

The first output terminal Out1 for determining the impedance of the antenna apparatus 50 is connected to the output terminal 21c of the comparator 21, and the second output terminal Out2 is connected to the emitter of the second transistor TR2 of the current limiting circuit 10. A combination of the voltage level of the first output terminal Out1 and that of the second output terminal Out2 allows a more detailed impedance state of the antenna apparatus 50 to be determined.

As described above, Fig. 3 describes states of the first transistor TR1, the second transistor TR2, and the third transistor TR3 in the case where the impedance of the antenna apparatus 50 is classified into the modes of high impedance, proper impedance, and low impedance. At the same time, Fig. 3 also describes whether each of the voltage levels of the first output terminal Out1 of the antenna-apparatus connection-state determination circuit 20 and the second output terminal Out2 connected to the emitter of the second transistor TR2 is low or high.

A circuit operation of the antenna-apparatus connection-state determination circuit 20 performed when the impedance of the antenna apparatus 50 is in the proper impedance mode will be described.

The antenna-apparatus connection circuit 100 operates in the configuration in which, when the impedance of the antenna apparatus 50 is in the proper impedance mode, the first transistor TR1 is turned on and a proper current flows through the antenna apparatus 50.

When a current flows through the first transistor TR1, the same current also flows through the first resistance 11, and a voltage drop occurs across the first resistance 11. The voltage drop across the first resistance 11 which occurs when a proper current within the proper impedance range of the antenna apparatus 50 flows corresponds to a voltage equal to or larger than a predetermined voltage which is sufficient to reverse the output voltage of the comparator 21. In other words, the values of the fifth resistance 25, the sixth resistance 26, and the seventh resistance 27 are set so that the comparator 21 outputs a voltage of low level to the output terminal 21c in response to the voltage drop when the voltage drop across the first resistance 11 corresponds to a voltage equal to or larger than the predetermined voltage. Therefore, the first output terminal Out1 goes to the low level. As described above, the third transistor TR3 is turned off, and the second transistor TR2 is turned on, whereby the second output terminal Out2 goes to the low level.

When the impedance of the antenna apparatus 50 is in the proper impedance mode, as illustrated in the second mode in Fig. 3, the first output terminal Out1 is in the low level, and the second output terminal Out2 is also in the low level.

A circuit operation performed when the impedance of the antenna apparatus 50 is in the high impedance mode will be described.

When the impedance of the antenna apparatus 50 is in the high impedance mode, a current flows through the first transistor TR1, and a voltage drop occurs across the first resistance 11. Since the impedance of the antenna apparatus 50 is in the high impedance mode, the current flowing through the first resistance 11 is smaller than that flowing when the impedance of the antenna apparatus 50 is in the proper impedance mode. Therefore, the voltage drop across the first resistance 11 corresponds to a voltage smaller than the predetermined voltage which is sufficient to reverse the above-described output voltage of the comparator 21 from high to low. Therefore, the voltage level at the output terminal 21c of the comparator 21 becomes high. As described above, the third transistor TR3 is turned off, and the second transistor TR2 is turned on, whereby the second output terminal Out2 goes to the low level.

When the impedance of the antenna apparatus 50 is in the high impedance mode, as illustrated in the first mode in Fig. 3, the first output terminal Out1 is in the high level, and the second output terminal Out2 is in the low level.

A circuit operation performed when the impedance of the antenna apparatus 50 is in the low impedance mode will be described.

A current flows through the first transistor TR1, and a voltage drop occurs across the first resistance 11. As described above, after that, the first transistor TR1 is turned off. Then, a current flows through the antenna apparatus 50 via the fourth resistance 14. The value of the current flowing through the first resistance 11 at that time is set to be smaller than the minimum value of a proper current corresponding to the proper impedance of the antenna apparatus 50. Therefore, the comparator 21 does not output a low voltage to the output terminal 21c in response to the voltage drop across the first resistance 11. Consequently, the voltage level at the output terminal 21c of the comparator 21 becomes high. As described above, the third transistor TR3 is turned on, and the second transistor TR2 is turned off, whereby the second output terminal Out2 goes to the high level.

When the impedance of the antenna apparatus 50 is in the low impedance mode, as illustrated in the third mode in Fig. 3, the first output terminal Out1 is in the high level, and the second output terminal Out2 is also in the high level.

Thus, when the impedance of the antenna apparatus 50 is in the proper impedance mode, the output voltage of the comparator 21 becomes low. When the impedance of the antenna apparatus 50 is in the high impedance mode or the low impedance mode, the output voltage of the comparator 21 becomes high. Therefore, whether or not the impedance of the antenna apparatus 50 is in the proper impedance mode can be detected by using only the output voltage of the first output terminal Out1 of the antenna-apparatus connection-state determination circuit 20.

As can be seen from Fig. 3, when the impedance of the antenna apparatus 50 is in the high impedance mode, the first output terminal Out1 is in the high level, and the second output terminal Out2 is in the low level. When the impedance of the antenna apparatus 50 is in the proper impedance mode, the first output terminal Out1 is in the low level, and the second output terminal Out2 is also in the low level. When the impedance of the antenna apparatus 50 is in the low impedance mode, the first output terminal Out1 is in the high level, and the second output terminal Out2 is also in the high level.

Thus, a detailed determination as to whether the impedance of the antenna apparatus 50 is in the high impedance mode, the proper impedance mode, or the low impedance mode can be performed by combining the voltage level of the first output terminal Out1 and that of the second output terminal Out2.

As described above, the antenna-apparatus connection circuit 100 according to the embodiment of the present invention enables current limiting to be performed, and enables the value of the fourth resistance 14 to be set to any value. Accordingly, the value of the fourth resistance 14 can be increased. As a result, the magnitude of a current flowing after current limiting can be made smaller, achieving a circuit configuration preferable for power saving.

The present invention is not limited to the above-described embodiment, and can be implemented by changing the embodiment as appropriate in such a manner that the effect is achieved. For example, the antenna-apparatus connection circuit in the present invention includes components equivalent to those in Fig. 2. In addition, the antenna-apparatus connection circuit may include other circuit components as long as the circuit components do not interfere with the operation. Instead of bipolar transistors, field effect transistors (FETs) may be used as the first switching element 1, the second switching element 2, and the third switching element 3.

## Claims

1. An antenna-apparatus connection circuit (100) provided with an antenna apparatus connector (71) connected to an antenna apparatus (50), and a power terminal (72), the antenna-apparatus connection circuit (100) comprising:
a first switching element (1) having a control end, a first end, and a second end;
a second switching element (2) having a control end, a first end, and a second end;
a first resistance (11) having a first end connected to the power terminal (72); and
a second resistance (12) having a first end connected to the ground,
wherein the first end of the first switching element (1) is connected to the second end of the first resistance (11), the second end of the first switching element (1) is connected to the antenna apparatus connector (71), the first end of the second switching element (2) is connected to the second end of the second resistance (12), the second end of the second switching element (2) is connected to the control end of the first switching element (1), and the control end of the second switching element (2) is connected to the second end of the first switching element (1),
wherein the antenna-apparatus connection circuit (100) further comprises
a third switching element (3) having a control end, a first end, and a second end, and
a third resistance (13) having a first end connected to the control end of the first switching element (1),
wherein the first end of the third switching element (3) is connected to the power terminal (72), the second end of the third switching element (3) is connected to the first end of the second switching element (2), the control end of the third switching element (3) is connected to the second end of the third resistance (13), and a fourth resistance (14) is connected between the first end and the second end of the first switching element (1), and
wherein, when an impedance of the antenna apparatus (50) is equal to or larger than a minimum value of a predetermined proper impedance, the third switching element (3) is turned off, and the first switching element (1) is turned on, whereas, when the impedance of the antenna apparatus (50) is smaller than the minimum value of the proper impedance, the third switching element (3) is turned on, and the first switching element (1) is turned off.

2. The antenna-apparatus connection circuit (100) according to Claim 1,
wherein the first switching element (1) is a first transistor (TR1) of PNP type, the second switching element (2) is a second transistor (TR2) of NPN type, the third switching element (3) is a third transistor (TR3) of PNP type, each of the first ends of the first switching element (1), the second switching element (2), and the third switching element (3) is an emitter, each of the second ends of the first switching element (1), the second switching element (2), and the third switching element (3) is a collector, and each of the control ends of the first switching element (1), the second switching element (2), and the third switching element (3) is a base, and
wherein a temperature characteristic of a base-emitter voltage of the first transistor (TR1) matches a temperature characteristic of a base-emitter voltage of the third transistor (TR3).

3. The antenna-apparatus connection circuit (100) according to Claim 1 or 2, further comprising:
a comparator (21) having an inverting input terminal (21a), a non-inverting input terminal (21b), and an output terminal (21c),
wherein the inverting input terminal (21a) is connected to the first end of the first resistance (11) via a fifth resistance (25), the non-inverting input terminal (21b) is connected to the second end of the first resistance (11) via a sixth resistance (26), and a seventh resistance (27) is connected between the inverting input terminal (21a) and the output terminal (21c), and
wherein whether or not the impedance of the antenna apparatus (50) is the proper impedance is detectable by using an output voltage level of the comparator (21).

## Patentansprüche

1. Antennenvorrichtungsverbindungsschaltung (100), die mit einer Antennenvorrichtungsverbindungseinrichtung (71), die mit einer Antennenvorrichtung (50) verbunden ist, und einem Leistungsanschluss (72) versehen ist, wobei die Antennenvorrichtungsverbindungsschaltung (100) aufweist:
ein erstes Schaltelement (1) mit einem Steuerende, einem ersten Ende und einem zweiten Ende;
ein zweites Schaltelement (2) mit einem Steuerende, einem ersten Ende und einem zweiten Ende;
einen ersten Widerstand (11) mit einem ersten Ende, das mit dem Leistungsanschluss (72) verbunden ist; und
einen zweiten Widerstand (12) mit einem ersten Ende, das mit der Masse verbunden ist,
wobei das erste Ende des ersten Schaltelements (1) mit dem zweiten Ende des ersten Widerstands (11) verbunden ist, das zweite Ende des ersten Schaltelements (1) mit der Antennenvorrichtungsverbindungseinrichtung (71) verbunden ist, das erste Ende des zweiten Schaltelements (2) mit dem zweiten Ende des zweiten Widerstands (12) verbunden ist, das zweite Ende des zweiten Schaltelements (2) mit dem Steuerende des ersten Schaltelements (1) verbunden ist und das Steuerende des zweiten Schaltelements (2) mit dem zweiten Ende des ersten Schaltelements (1) verbunden ist,
wobei die Antennenvorrichtungsverbindungsschaltung (100) ferner aufweist
ein drittes Schaltelement (3) mit einem Steuerende, einem ersten Ende und einem zweiten Ende, und
einen dritten Widerstand (13) mit einem ersten Ende, das mit dem Steuerende des ersten Schaltelements (1) verbunden ist,
wobei das erste Ende des dritten Schaltelements (3) mit dem Leistungsanschluss (72) verbunden ist, das zweite Ende des dritten Schaltelements (3) mit dem ersten Ende des zweiten Schaltelements (2) verbunden ist, das Steuerende des dritten Schaltelements (3) mit dem zweiten Ende des dritten Widerstands (13) verbunden ist und ein vierter Widerstand (14) zwischen das erste Ende und das zweite Ende des ersten Schaltelements (1) geschaltet ist, und
wobei, wenn eine Impedanz der Antennenvorrichtung (50) gleich einem oder größer als ein Mindestwert einer vorbestimmten geeigneten Impedanz ist, das dritte Schaltelement (3) ausgeschaltet wird und das erste Schaltelement (1) eingeschaltet wird, wohingegen, wenn die Impedanz der Antennenvorrichtung (50) kleiner als der Mindestwert der geeigneten Impedanz ist, das dritte Schaltelement (3) eingeschaltet wird und das erste Schaltelement (1) ausgeschaltet wird.

2. Antennenvorrichtungsverbindungsschaltung (100) nach Anspruch 1,
wobei das erste Schaltelement (1) ein erster Transistor (TR1) vom PNP-Typ ist, das zweite Schaltelement (2) ein zweiter Transistor (TR2) vom NPN-Typ ist, das dritte Schaltelement (3) ein dritter Transistor (TR3) vom PNP-Typ ist, jedes der ersten Enden des ersten Schaltelements (1), des zweiten Schaltelements (2) und des dritten Schaltelements (3) ein Emitter ist, jedes der zweiten Enden des ersten Schaltelements (1), des zweiten Schaltelements (2) und des dritten Schaltelements (3) ein Kollektor ist, und jedes der Steuerenden des ersten Schaltelements (1), des zweiten Schaltelements (2) und des dritten Schaltelements (3) eine Basis ist, und
wobei eine Temperaturcharakteristik einer Basis-Emitter-Spannung des ersten Transistors (TR1) mit einer Temperaturcharakteristik einer Basis-Emitter-Spannung des dritten Transistors (TR3) übereinstimmt.

3. Antennenvorrichtungsverbindungsschaltung (100) nach Anspruch 1 oder 2, ferner aufweisend:
eine Vergleichseinrichtung (21) mit einem invertierenden Eingangsanschluss (21 a), einem nicht-invertierenden Eingangsanschluss (21 b) und einem Ausgangsanschluss (21 c),
wobei der invertierende Eingangsanschluss (21 a) über einen fünften Widerstand (25) mit dem ersten Ende des ersten Widerstands (11) verbunden ist, der nicht-invertierende Eingangsanschluss (21 b) über einen sechsten Widerstand (26) mit dem zweiten Ende des ersten Widerstands (11) verbunden ist und ein siebter Widerstand (27) zwischen den invertierenden Eingangsanschluss (21a) und den Ausgangsanschluss (21c) geschaltet ist, und
wobei unter Verwendung eines Ausgangsspannungspegels der Vergleichseinrichtung (21) detektiert werden kann, ob die Impedanz der Antennenvorrichtung (50) die geeignete Impedanz ist oder nicht.

## Revendications

1. Circuit de connexion de dispositif d'antenne (100) pourvu d'un connecteur de dispositif d'antenne (71) connecté à un dispositif d'antenne (50), et d'une borne d'alimentation (72), le circuit de connexion de dispositif d'antenne (100) comprenant :
un premier élément de commutation (1) ayant une extrémité de commande, une première extrémité et une deuxième extrémité ;
un deuxième élément de commutation (2) ayant une extrémité de commande, une première extrémité et une deuxième extrémité ;
une première résistance (11) ayant une première extrémité connectée à la borne d'alimentation (72) ; et
une deuxième résistance (12) ayant une première extrémité connectée à la masse,
dans lequel la première extrémité du premier élément de commutation (1) est connectée à la deuxième extrémité de la première résistance (11), la deuxième extrémité du premier élément de commutation (1) est connectée au connecteur de dispositif d'antenne (71), la première extrémité du deuxième élément de commutation (2) est connectée à la deuxième extrémité de la deuxième résistance (12), la deuxième extrémité du deuxième élément de commutation (2) est connectée à l'extrémité de commande du premier élément de commutation (1), et l'extrémité de commande du deuxième élément de commutation (2) est connectée à la deuxième extrémité du premier élément de commutation (1),
dans lequel le circuit de connexion de dispositif d'antenne (100) comprend en outre
un troisième élément de commutation (3) ayant une extrémité de commande, une première extrémité et une deuxième extrémité, et
une troisième résistance (13) ayant une première extrémité connectée à l'extrémité de commande du premier élément de commutation (1),
dans lequel la première extrémité du troisième élément de commutation (3) est connectée à la borne d'alimentation (72), la deuxième extrémité du troisième élément de commutation (3) est connectée à la première extrémité du deuxième élément de commutation (2), l'extrémité de commande du troisième élément de commutation (3) est connectée à la deuxième extrémité de la troisième résistance (13), et une quatrième résistance (14) est connectée entre la première extrémité et la deuxième extrémité du premier élément de commutation (1), et
dans lequel, quand une impédance du dispositif d'antenne (50) est supérieure ou égale à une valeur minimum d'une impédance propre prédéterminée, le troisième élément de commutation (3) est rendu bloquant, et le premier élément de commutation (1) est rendu passant, tandis que, lorsque l'impédance du dispositif d'antenne (50) est inférieure à la valeur minimum de l'impédance propre, le troisième élément de commutation (3) est rendu passant, et le premier élément de commutation (1) est rendu bloquant.

2. Circuit de connexion de dispositif d'antenne (100) selon la revendication 1,
dans lequel le premier élément de commutation (1) est un premier transistor (TR1) de type PNP, le deuxième élément de commutation (2) est un deuxième transistor (TR2) de type NPN, le troisième élément de commutation (3) est un troisième transistor (TR3) de type PNP, chacune des premières extrémités du premier élément de commutation (1), du deuxième élément de commutation (2) et du troisième élément de commutation (3) est un émetteur, chacune des deuxièmes extrémités du premier élément de commutation (1), du deuxième élément de commutation (2) et du troisième élément de commutation (3) est un collecteur, et chacune des extrémités de commande du premier élément de commutation (1), du deuxième élément de commutation (2) et du troisième élément de commutation (3) est une base, et
dans lequel une caractéristique de température d'une tension base-émetteur du premier transistor (TR1) correspond à une caractéristique de température d'une tension base-émetteur du troisième transistor (TR3).

3. Circuit de connexion de dispositif d'antenne (100) selon la revendication 1 ou 2, comprenant en outre :
un comparateur (21) ayant une borne d'entrée inverseuse (21a), une borne d'entrée non inverseuse (21b) et une borne de sortie (21c),
dans lequel la borne d'entrée inverseuse (21a) est connectée à la première extrémité de la première résistance (11) à travers une cinquième résistance (25), la borne d'entrée non inverseuse (21b) est connectée à la deuxième extrémité de la première résistance (11) à travers une sixième résistance (26), et une septième résistance (27) est connectée entre la borne d'entrée inverseuse (21a) et la borne de sortie (21c), et
dans lequel on peut détecter si l'impédance du dispositif d'antenne (50) est ou non l'impédance propre en utilisant un niveau de tension de sortie du comparateur (21).
